# EUROPÄISCHE PATENTSCHRIFT

(11) **EP 0 404 780 B1**
(45) Veröffentlichungstag und Bekanntmachung des Hinweises auf die Patenterteilung: **05.05.1993**
(21) Anmeldenummer: 89902247.9
(22) Anmeldetag: 02.02.1989
(51) Int. Cl.: B60T 8/00, B60T 17/00, B60R 16/02

(54) **ANTIBLOCKIERREGELSYSTEM**
AUTOMATIC ANTISKID SYSTEM
SYSTEME DE REGLAGE ANTIBLOCAGE

(30) Priorität: 16.03.1988 DE 3808724
(43) Veröffentlichungstag der Anmeldung: 02.01.1991
(73) Patentinhaber: ROBERT BOSCH GMBH, 70442 Stuttgart (DE)
(72) Erfinder: EMIG, Reiner, D-7146 Tamm (DE); POLITZ, Werner, D-7250 Leonberg (DE)
(74) Vertreter: Kammer, Arno, Dipl.-Ing.
(86) Internationale Anmeldenummer: EP8900091
(87) Internationale Veröffentlichungsnummer: WO8908571

(56) Entgegenhaltungen:
- US-A- 3 955 652

## Beschreibung

Die Erfindung betrifft einen Antiblockierregler für einen Fahrzeuganhänger oder Fahrzeugauflieger mit den Merkmalen des Anspruchs 1.

### Stand der Technik

Es ist z.B. aus der DE-B2-2352 496 bekannt, bei Wagenzügen, bei denen der Anhänger oder Auflieger mit einem ABS ausgerüstet ist, zwischen Zugwagen und Anhänger/Auflieger eine erweiterte steckbare Verbindung vorzusehen, über die das Anhänger-/Auflieger-ABS an die Stromversorgung des Zugwagens angeschlossen ist und versorgt wird.

Die Leistungsverstärker werden hier über die Bremslichtleitung versorgt, während für die Reglerelektronik eine zusätzliche Versorgungsleitung vorgesehen ist.

### Vorteile der Erfindung

Bei der erfindungsgemäßen Ausbildung der Stromversorgung des Anhänger-/Auflieger-ABS ist eine zusätzliche Verbindung zwischen Zugwagen und Anhänger/Auflieger nicht notwendig. Durch die Nutzung der Sensorsignale zur Stromversorgung der Reglerelektronik ist sichergestellt, daß diese ab Fahrtbeginn des Wagenzugs schon arbeitet und nicht erst bei Bremsbeginn aktiviert wird, was der Fall wäre, wenn das Bremslichtschaltsignal die Stromversorgung der gesamten Anlage bewirken würde. Hierdurch wird eine komfortable Reglerauslegung möglich. Die benötigte höhere Leistung für die Verstärker und damit für die Bestätigung der Magnetventile, die aus den Sensorsignalen nicht abgeleitet werden kann, wird über die Bremslichtleitung angeliefert, und zwar für diesen Zweck zeitig genug, um im Falle der Reglerauslösung ein unverzögertes Ansprechen der Ventile zu gewährleisten. Neben der Unabhängigkeit vom Bordnetz wird auch eine Unabhängigkeit von dessen Störungen erreicht.

### Figurenbeschreibung

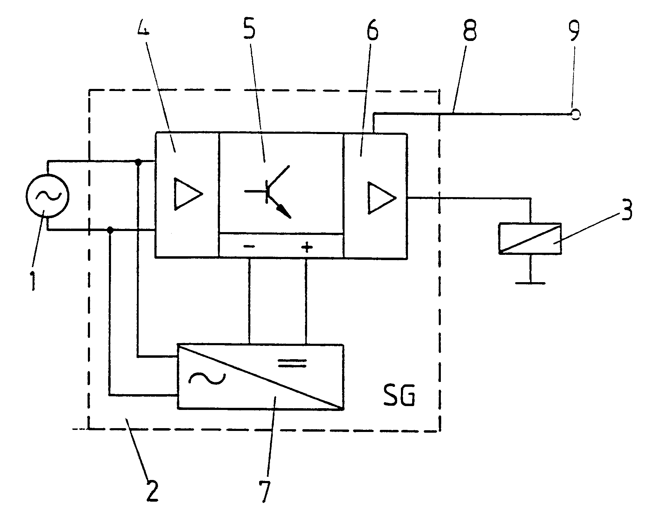

Anhand eines in der Zeichnung dargestellten Ausführungsbeispiels wird die Erfindung näher erläutert.

In der Zeichnung ist in einer Prinzipdarstellung ein Anhänger-ABS dargestellt. Es besteht aus einem Radgeschwindigkeitssensor 1 (weitere Sensoren könnten vorgesehen sein), aus einem Steuergerät 2 und einem Magnetventil 3 (auch hier könnten weitere Ventile vorgesehen sein). Die Arbeitsweise des Steuergeräts 2 ist bekannt und braucht hier nicht näher erläutert werden. Das Steuergerät besteht aus einem Vorverstärker 4 für die Signale des Sensors 1, aus einer Reglerlogik 5, in der aus den zugeführten Sensorsignalen Steuersignale für die Ventile 3 erzeugt werden, und aus einem oder mehreren Leistungsverstärkern 6, deren Ausgangssignale das oder die Magnetventile 3 steuern.

Die Reglerelektronik 4/5 mit nur geringem Leistungsbedarf wird durch eine Stromversorgung 7 versorgt, die die Sensorsignale des oder der Sensoren 1 gleichrichtet und glättet und in die Reglerelektronik einspeist. Durch diese Art der Stromversorgung ist sichergestellt, daß die Reglerelektronik 4/5 ab Fahrtbeginn arbeitet, so daß z.B. bei Bremsbeginn und dem möglicherweise sofort danach einsetzenden Regelbeginn bereits ein digitaler Radgeschwindigkeitswert und/oder eine Referenzgröße für die Schlupfmessung zur Verfügung steht. Demgegenüber wird der (oder die) Leistungsverstärker 6 über die Bremslichtleitung 8, die mit einer Klemme 9 mit der Bremsleitung des Zugwagens verbunden wird, versorgt. Diese Versorgung setzt hier erst ab Bremsbeginn ein.

## Patentansprüche

1. Antiblockierregler für einen Fahrzeuganhänger oder Fahrzeugauflieger, bestehend aus wenigstens einem die Radgeschwindigkeit eines Fahrzeugrads messenden Sensor (1), aus einem die Reglerelektronik (5) enthaltenden Steuergerät (2), dem wenigstens ein Sensorsignal zugeführt wird, und das in Abhängigkeit vom Radbewegungsverhalten Bremsdrucksteuersignale erzeugt, aus einer Magnetventile enthaltenden Bremsdrucksteuereinheit (3), der die über wenigstens einen Leistungsverstärker (6) geführten Bremsdrucksteuersignale zur Druckvariation zugeführt werden, und aus einer Stromversorgung für den Antiblockierregler (1), wobei die Stromversorgung für den wenigstens einen Leistungsverstärker (6) über die beim Bremsen vom Zugfahrzeug gespeiste Bremslichtleitung (8) erfolgt, dadurch gekennzeichnet, daß die Stromversorgung (5) für die Reglerelektronik aus den Signalen des wenigstens einen Sensors abgeleitet wird (in 7).

## Claims

1. Anti-lock controller for a vehicle trailer or vehicle semi-trailer, consisting of at least one sensor (1) measuring the wheel speed of a vehicle wheel, consisting of a control unit (2) containing the controller electronics (5), to which control unit is supplied at least one sensor signal and which generates brake pressure control signals as a function of wheel motion behaviour, consisting of a brake pressure control unit (3) containing a magnetic valve, to which brake pressure control unit (3) are supplied brake pressure control signals carried via at least one power amplifier (6), and consisting of an electricity supply for the anti-lock controller (1), whereby the electricity supply for the at least one power amplifier (6) takes place via the brake light conductor (8) supplied during braking of the traction vehicle, characterised in that the electricity supply (5) is derived (in 7) from the signals of the at least one sensor.

## Revendications

1. Moyen de régulation anti-blocage pour une remorque ou semi-remorque de véhicule composé d'au moins un capteur (1) mesurant la vitesse d'une roue du véhicule, d'un dispositif de commande (2) comportant l'électronique de régulation (5), qui reçoit au moins un signal de capteur et qui génère un signal de commande de pression de frein en fonction du comportement en mouvement de la roue, d'une unité de commande de pression de frein (3) avec une électrovanne qui reçoit les signaux de commande de pression pour modifier la pression par l'intermédiaire d'au moins un amplificateur de puissance (6) et d'une alimentation en courant pour le moyen de régulation anti-blocage (1), l'alimentation en courant au moins de cet amplificateur de puissance (6) se fait par la ligne électrique d'alimentation des feux de freinage (8) qui est alimentée lors du freinage du véhicule tracteur, caractérisé en ce que l'alimentation électrique (5) est dérivée des signaux d'au moins un capteur (dans 7).
